**Europäisches Patentamt**

**European Patent Office**

**Office européen des brevets**

(11) Numéro de publication : **0 465 301 A1**

# DEMANDE DE BREVET EUROPEEN

(21) Numéro de dépôt : **91401719.9**

(22) Date de dépôt : **26.06.91**

(51) Int. Cl.⁵ : **F16K 31/524**

(30) Priorité : **03.07.90 FR 9008371**

(43) Date de publication de la demande :
**08.01.92 Bulletin 92/02**

(84) Etats contractants désignés :
**DE GB IT NL**

(71) Demandeur : **KLEY-FRANCE, Société Anonyme dite:**
**74, Avenue Pablo Picasso**
**F-92000 Nanterre (FR)**

(72) Inventeur : **Robert, Brieuc**
**26, rue Zilina**
**F-92000 Nanterre (FR)**

(74) Mandataire : **Lefebure, Gérard et al**
**Office Blétry 2, boulevard de Strasbourg**
**F-75010 Paris (FR)**

(54) **Distributeur de fluide à commande par came.**

(57)   Dans ce distributeur comprenant un corps ayant quatre passages (P,T,A et B), et un tiroir (1) qui peut coulisser dans un alésage du corps entre deux positions extrêmes (a et b) sous l'action des deux cames (4 et 5) pour permettre l'actionnement séquentiel de deux vérins (6 et 7), qui sont respectivement raccordés aux passages (A et B) du corps, l'alésage et le tiroir (1) sont conformes de telle façon que dans une troisième position (o) du tirolr, entre les deux positions extrêmes (a et b) une communication est établie entre les passages (T, A et B), tandis que le passage (P) est fermé, que dans des positions intermédiaires (a$_i$) du tiroir, entre les positions (a et o), une communication est établie seulement entre les passages (T et B), les passages (P et A) étant obturés, et que dans d'autres positions intermédiaires (b$_i$), entre les positions (b et o), une communication est établie seulement entre les passages (T et A), les passages (P et B) étant obturés ; les cames (4 et 5) ont chacune un profil en escalier à trois niveaux (a, o, b) définissant respectivement, les trois positions (a, o, b) du tiroir, la transition entre deux niveaux successifs quelconques étant constituée par une rampe (a$_i$, b$_i$) qui définit lesdites positions intermédiaires (a$_i$, b$_i$).

EP 0 465 301 A1

**FIG.2**

La présente invention concerne un distributeur de fluide à commande par came, du type comprenant un corps ayant des premier et second passages qui, en service, sont raccordés respectivement à une pompe et à un réservoir de fluide, des troisième et quatrième passages qui, en service, sont raccordés à un circuit d'utilisation et un alésage intersectant les quatre passages, un tiroir qui est monté coulissant dans ledit alésage du corps et qui, dans une première position, établit des communications entre les premier et troisième passages et entre les second et quatrième passages, et, dans une seconde position espacée axialement de la première position, établit des communications entre les premier et quatrième passages et entre les second et troisième passages, une première came qui, en service, peut agir sur une des extrémités du tiroir pour le déplacer axialement de sa première position à sa seconde position, et une seconde came qui, en service, peut agir sur l'autre extrémité du tiroir pour le déplacer de sa seconde position à sa première position, les première et seconde cames étant liées mécaniquement l'une à l'autre.

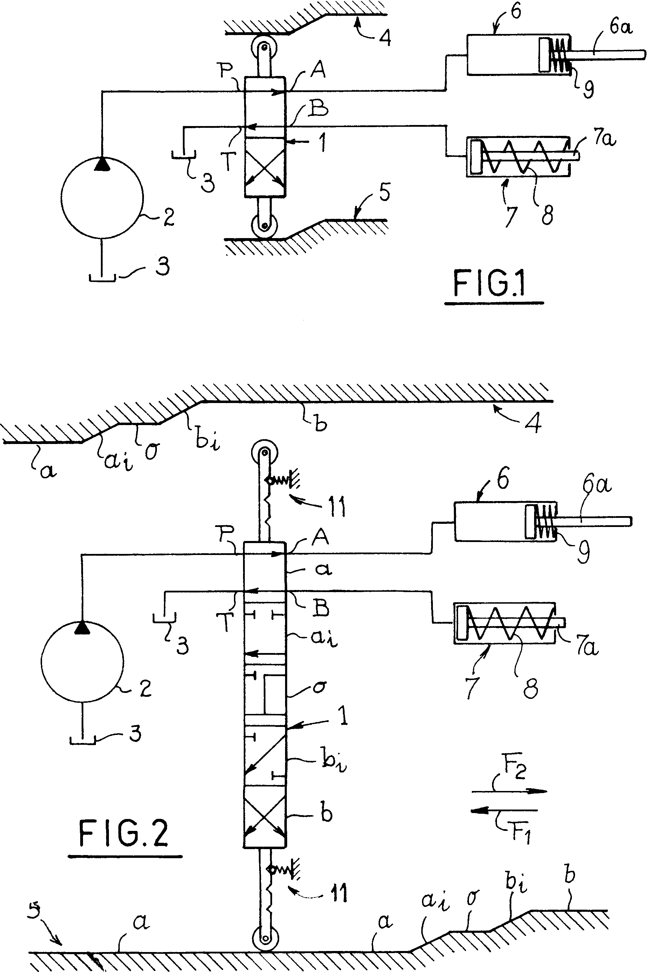

On connaît déjà un distributeur de fluide du type sus-indiqué, par exemple par la demande de brevet allemand N° DE-A- 24 14 632. Un schéma hydraulique simplifié d'un tel distributeur connu est montré dans la figure 1 des dessins annexés. Dans la figure 1, le numéro de référence 1 désigne le tiroir mobile du distributeur; P et T désignent des passages du corps (non montré) du distributeur, qui, en service, sont raccordés respectivement à une pompe 2 et à un réservoir 3 contenant un fluide hydraulique, par exemple de l'huile dans le cas d'un système hydraulique (dans le cas d'un système pneumatique, le réservoir 3 serait tout simplement remplacé par l'atmosphère environnante); A et B désignent deux autres passages du corps du ditributeur qui, en service, sont raccordés à un circuit d'utilisation; 4 et 5 désignent deux cames, liées mécaniquement l'une à l'autre, pour commander le distributeur, chacune des deux cames 4 et 5 agissant sur une extrémité respective du tiroir 1.

Dans le cas où les passages A et B du corps du distributeur sont respectivement raccordés à des vérins 6 et 7 comme montré dans la figure 1, il est tout-à-fait clair pour l'homme de l'art que, lorsque la pompe 2 fonctionne et que le tiroir 1 se trouve dans la position montrée dans la figure 1, un fluide hydraulique est envoyé au vérin 6, de sorte que sa tige de piston 6a est sortie, tandis que le vérin 7 est relié au réservoir 3, de sorte que sa tige de piston 7a est rentrée par un ressort de rappel 8. Par contre, quand le tiroir 1 est amené par la came 5 dans sa seconde position, dans laquelle une communication est établie entre les passages P et B et une autre communication est établie entre les passages T et A, un fluide hyraulique est envoyé au vérin 7, de sorte que sa tige de piston 7a est sortie, tandis que le vérin 6 et relié au réservoir 3, de sorte que sa tige de piston 6a est rentrée par un ressort de rappel 9. Autrement dit, le distributeur de la figure 1 se comporte comme un inverseur à deux voies permettant d'actionner au choix le vérin 6 ou le vérin 7 selon la position donnée au tiroir 1. On notera également que, à chaque commutation du tiroir 1, les deux tiges de piston 6a et 7a sont mobiles en même temps (l'une rentre pendant que l'autre sort).

Toutefois, dans un certain nombre d'applications, il est nécessaire que les actions commandées par les deux vérins soient séquentielles pendant un cycle de fonctionnement, c'est-à-dire qu'une action commandée par l'un des deux vérins soit complètement achevée avant que commence l'action suivante commandée par l'autre vérin. Dans ce cas, les tiges de piston des deux vérins ne doivent jamais être mobiles simultanément. Un premier exemple d'application dans lequel des actions séquentielles doivent avoir lieu est le cas de certaines machines outils dans lesquelles la pièce à usiner ou à traiter est maintenue par un étau ou autre dispositif de maintien, dont la ou les mâchoires sont commandées par un vérin hydraulique ou pneumatique, et dans lesquelles l'outil est amené en contact avec la pièce à usiner ou à traiter au moyen d'un autre vérin hyraulique ou pneumatique. Dans ce cas, il est évident que l'outil ne doit pas être amené en contact avec la pièce tant que celle-ci n'a pas été complètement saisie et serrée par l'étau. Un autre exemple d'application est le cas des treuils hydrauliques linéaires ou autres appareils moteurs à reprises successives, dans lesquels deux blocs de serrage mobiles l'un par rapport à l'autre saisissent et libèrent alternativement un câble, une barre ou autre élément allongé sur lequel l'appareil agi. Dans ce cas, les mâchoires de l'un quelconque des deux blocs de serrage ne doivent pas relâcher le câble tant que celui-ci n'a pas été complètement saisi et serré par les mâchoires de l'autre bloc de serrage.

Le distributeur connu de la figure 1 est incapable de commander séquentiellement deux vérins.

La présente invention a donc pour but de fournir un distributeur de fluide du type sus-indiqué, permettant de commander séquentiellement deux vérins dans un ordre prédéterminé.

Le distributeur de fluide selon l'invention est caractérisé en ce que, pour permettre l'actionnement séquentiel de deux vérins qui, en service, sont respectivement raccordés aux troisième et quatrième passages du corps du distributeur, l'alésage et le tiroir sont conformés de telle façon que dans une troisième position du tiroir, entre ses première et seconde positions, une communication est établie entre les second, troisième et quatrième passages, tandis que le premier passage est fermé, que dans des positions intermédiaires du tiroir, entre les première et troisième positions, une communication est établie seulement entre les second et quatrième passages, les premier et troisième passages étant obturés par le tiroir, et que dans d'autres positions intermédiaires du tiroir, entre les seconde et troisième positions, une communication est établie seulement entre les second et troisième passages, les premier et quatrième passages étant obturés par le tiroir, et en ce que les première et seconde cames ont chacune un profil en escalier à trois niveaux définissant respectivement, dans l'ordre, la première, la troisième et la seconde position du tiroir, la transition entre deux niveaux successifs quelconques parmi les trois niveaux étant constituée par une rampe qui définit lesdites positions intermédiaires du tiroir.

Dans certains cas, il peut arriver que les deux cames ne soient pas simultanément en contact respectivement avec les extrémités opposées du tiroir du distributeur. Cela est notamment le cas lorsque les profils en escalier des première et seconde cames sont décalés l'un par rapport à l'autre transversalement à l'axe longitudinal du tiroir, de sorte que, au moins pour certaines positions des deux cames, la distance entre celles-ci, mesurée suivant l'axe longitudinal du tiroir, est plus grande que la longueur totale dudit tiroir. Dans ce cas, au moins un dispositif de retenue à enclenchement élastique peut être avantageusement prévu entre le tiroir et le corps du distributeur pour maintenir le tiroir dans l'une quelconque de ses première, seconde et troisième positions, tant qu'il n'est pas amené dans une autre de ses trois positions par l'une des deux cames.

Suivant une autre caractéristique de la présente invention, quand les deux vérins doivent être actionnés en relation avec le fonctionnement d'un troisième vérin, chacune des première et seconde cames peut être constituée par une tige qui est montée coulissante dans un passage du corps du distributeur qui s'étend perpendiculairement audit alésage et qui intersecte celui-ci à une de ses extrémités. Les tiges forment les cames peuvent alors s'étendre parallélement à l'axe longitudinal du troisième vérin et avoir une longueur correspondant à la course de l'élément mobile du troisième vérin, les deux tiges étant liées audit élément mobile ou à l'élément fixe du troisième vérin, tandis que le corps du distributeur est lié audit élément fixe ou audit élément mobile. Dans ces conditions, le tiroir du distributeur peut être commandé avec une grande précision malgré la longueur relativement grande des tiges formant les deux cames et malgré les déformations par flexion que les deux cames peuvent subir en service.

D'autres caractéristiques et avantages de l'invention ressortiront mieux au cours de la description qui va suivre et qui est donnée en référence aux dessins annexés sur lesquels :

La figure 1 est un schéma hydraulique simplifié d'un distributeur de fluide connu à commande par came.

La figure 2 est un schéma hydraulique simplifié d'un distributeur de fluide à commannde par came selon l'invention.

La figure 3 est une vue en coupe longitudinale d'un distributeur de fluide hydraulique selon l'invention.

La figure 4 est une vue en partie en élévation latérale et en partie en coupe suivant la ligne IV-IV de la figure 3.

Les figures 5 et 6 sont des vues partielles correspondant à la partie gauche de la figure 4, mais montrant deux variantes de réalisation du distributeur.

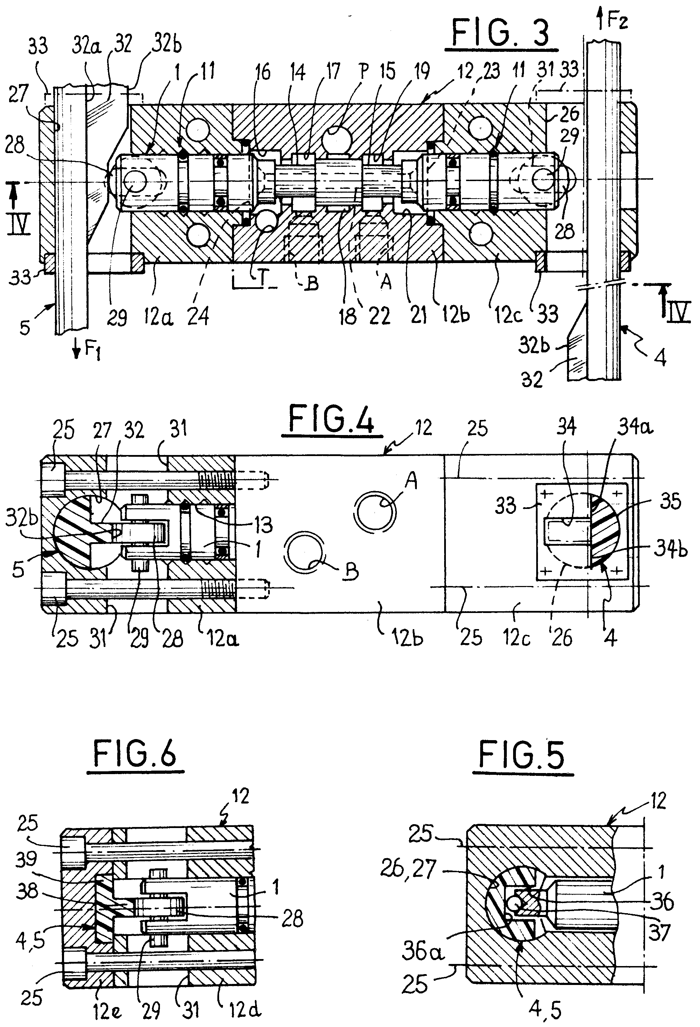

La figue 7 montre, à plus grande échelle, un détail du distributeur des figures 3 et 4.

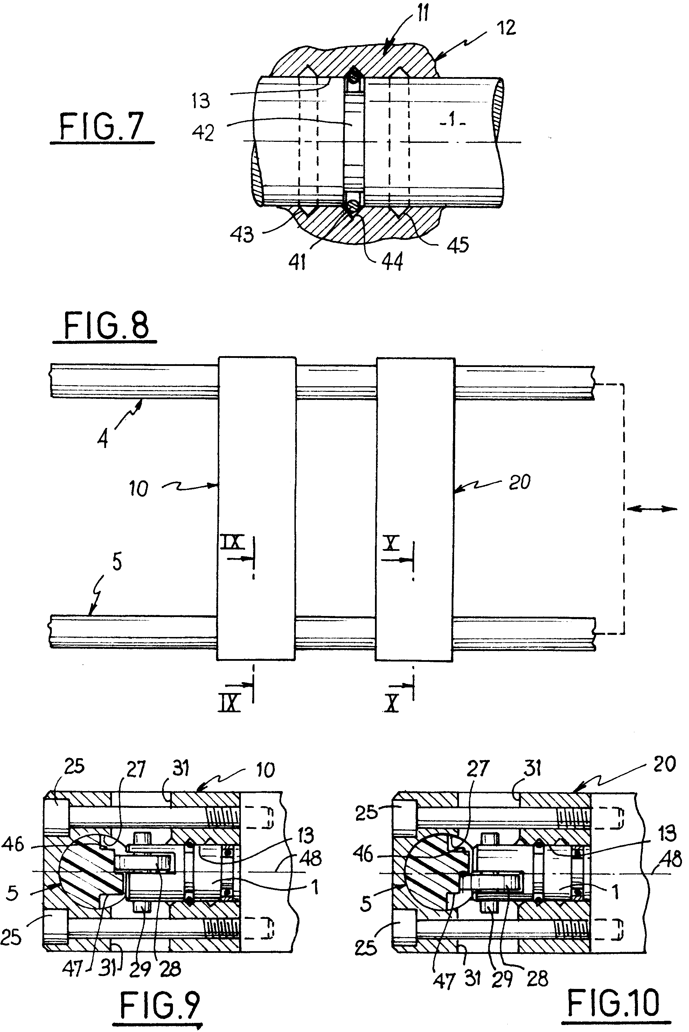

La figure 8 est une vue en plan montrant deux distributeurs de fluide selon l'invention, commandés par deux cames qui sont communes aux deux distributeurs.

Les figures 9 et 10 sont des vues partielles en coupe respectivement suivant les lignes IX-IX et X-X de la figure 8.

Dans la figure 2, les éléments qui jouent le même rôle que dans la figure 1 sont désignés par les mêmes numéros de référence et ne seront pas décrits à nouveau en détail. Selon la position du tiroir 1, le distributeur de fluide de la figure 2 peut avoir cinq états a, $a_i$, o, $b_i$ et b comme cela est schématisé dans la figure 2 par les cinq blocs désignés par les symboles de référence a, $a_i$, o, $b_i$ et b. Les deux états a et b, correspondant aux deux positions extrêmes du tiroir 1, sont identiques aux deux états du distributeur connu de la figure 1. Dans l'état o, correspondant à la position médiane du tiroir 1 entre ses deux positions extrêmes, le passage P raccordé à la pompe 2 est obturé par le tiroir 1, tandis que les passages A et B sont tous les deux en communication avec le passage T raccordé au réservoir 3. Dans l'état $a_i$ correspondant aux positions intermédiaires du tiroir 1 entre ses états a et o, les passages A et P sont obturés par le tiroir 1, tandis que le passage B est seul en communication avec le passage T. Enfin, dans l'état $b_i$, qui correspond aux positions intermédiaires du tiroir 1 entre ses états o et b, les passages B et P sont obturés par le tiroir, tandis que le passage A est seul en communication avec le passage T.

Dans la figure 2, chacune des deux cames 4 et 5 a un profil en escalier à trois niveaux a, o et b correspondant aux trois états a, o et b du distributeur et, pour cette raison, désignés par les mêmes symboles de référence. Le profil de chacune des deux cames 4 et 5 présente en outre une rampe $a_i$ entre les deux niveaux a et o et une rampe $b_i$ entre les deux niveaux o et b, les rampes $a_i$ et $b_i$ correspondant respectivement aux états intermédiaires $a_i$ et $b_i$ du distributeur.

Sur la figure 2, on peut voir également deux dispositifs de retenue libérables 11 à enclenchement élastique, qui servent à maintenir le tiroir 1 dans l'une quelconque des trois positions correspondant aux états a, o et b du distributeur, tant que le tiroir 1 n'est pas amené dans une autre de ces trois positions par l'une des deux cames 4 et 5. Comme montré dans la figure 2, chacun des deux dispositifs de retenue 11 peut être par exemple constitué par un élément tel qu'un doigt ou une bille, sollicité par un ressort, qui peut s'engager dans l'une quelconque parmi trois encoches en V formées dans le tiroir 1. Les trois encoches sont bien entendu espacées axialement l'une de l'autre d'une distance égale à la distance entre deux niveaux successifs a et o ou o et b du profil des cames 4 et 5.

On décrira maintenant un cycle de fonctionnement du distributeur de la figure 2 en partant de l'état du distributeur correspondant à la position des éléments représentés dans la figure 2. On supposera que les deux cames 4 et 5 sont déplacées ensemble en va-et-vient par rapport au corps du distributeur et que, à chaque cycle, elles effectuent un mouvement aller dans le sens de la flèche $F_i$ et un mouvement de retour dans le sens de la flèche $F_2$. Partant de l'état a du distributeur, le vérin 6 est sous pression et sa tige de piston 6a est complètement sortie, tandis que le vérin 7 est à vide et sa tige de piston 7a est complètement rentrée. Cette situation se poursuit tant que la partie a du profil de la came 5 agit sur l'extrémité correspondante du tiroir 1. La came 5 se déplaçant dans le sens de la flèche $F_1$ (de même que la came 4), quand la partie $a_i$ de la came 5 vient agir sur l'extrémité correspondante du tiroir 1, le distributeur passe dans l'état $a_i$, le passage A est obturé par le tiroir 1 et la tige de piston 6a du vérin 6 est bloquée en position sortie. Quand la partie o du profil de la came 5 vient ensuite agir sur l'exxtrémité correspondante du tiroir 1, le distributeur passe dans l'état o provoquant la mise à vide du vérin 6, de même que le vérin 7, mais celui-ci était déjà à vide. Il en résulte que la tige de piston 6a du vérin 6 rentre sous l'action du ressort 9, tandis que la, tige du piton 7a du vérin 7 reste rentrée. Quand la partie $b_i$ du profil de la came 5 vient ensuite agir sur l'extrémité correspondante du tiroir 1, le distributeur passe dans l'état $b_i$, dans lequel la mise à vide du vérin 6 se poursuit à travers les passages A et T, permettant à la tige de piston 6a du vérin 6 de rentrer complètement, tandis que le passage B est obturé par le tiroir 1 et la tige de piston 7a du vérin 7 est bloquée dans la position rentrée qu'elle occupe à ce moment. Enfin, quand la partie b du profil de la came 5 vient agir sur l'extrémité correspondante du tiroir 1 (à ce moment, l'autre extrémité du tiroir 1, vient en contact avec la partie b du profil de la came 4), le distributeur passe dans l'état b. Dans cet état, le vérin 6 est maintenu à vide par la communication entre les passages A et T, de sorte que sa tige de piston 6a reste rentrée, tandis que le vérin 7 est mis sous pression par la communication qui s'établit entre les passages P et B, de sorte que sa tige de piston 7a sort. Cette situation se poursuit même après inversion du sens de mouvement des deux cames 4 et 5 qui se déplacent alors dans le sens de la flèche $F_2$, tant que

la partie b du profil de la came 4 est en contact avec l'extrémité correspondante du tiroir 1. Quand la partie $b_i$ du profil de la came 4 vient agir sur l'extrémité correspondante du tiroir 1, le distributeur passe à nouveau dans l'état $b_i$. Dans cet état, le passage B étant obturé, le vérin 7 est maintenu sous pression et sa tige de piston 7a reste bloquée en position sortie, tandis que le vérin 6 reste maintenu à vide, tige de piston 6a rentrée. Quand la partie o du profil de la came 4 vient ensuite agir sur l'extrémité correspondante du tiroir 1, le distributeur passe dans l'état o, ce qui a pour effet de provoquer la mise à vide du vérin 7 dont la tige de piston 7a commence à rentrer, tandis que le vérin 6 reste maintenu à vide. Ensuite, quand la partie $a_i$ du profil de la came 4 vient agir sur l'extrémité correspondante du tiroir 1, le vérin 7 continue à se vider du fluide hydraulique qu'il contenait et sa tige de piston 7a achève de rentrer dans le cylindre du vérin 7, pendant que le passage A est obturé par le tiroir 1 et que le vérin 6 reste bloqué, tige de piston 6a rentrée. Enfin, quand la partie a du profil de la came 4 vient agir sur l'extrémité correspondante du tiroir 1, le distributeur passe dans l'état a, dans lequel le passage A est à nouveau mis en communication avec le passage P, provoquant ainsi la mise sous pression du vérin 6, donc la sortie de sa tige de piston 6a, pendant que le vérin 7 reste maintenu à vide par la communication entre les passages B et T, le cycle est alors achevé et un nouveau cycle commence avec l'inversion du mouvement des deux cames 4 et 5 (sens $F_1$).

Dans la description du fonctionnement qui précède, on a supposé que les deux cames 4 et 5 étaient mobiles par rapport au corps du distributeur. Toutefois, le fonctionnement serait exactement le même si les deux cames 4 et 5 étaient fixes et si c'était le corps du distributeur qui était déplacé par rapport aux deux cames.

On décrira maintenant une forme d'exécution concrète du distributeur de la figure 2 en faisant référence aux figures 3 et 4.

Le distributeur des figures 3 et 4 comporte un corps 12 dans l'alésage 13 duquel le tiroir 1 peut coulisser sous l'action de l'une des deux cames 4 et 5.

Le tiroir 1 comporte des gorges circulaires 14 et 15 qui, par translation du tiroir 1, peuvent être mises successivement et sélectivement en communication avec une succession de gorges circulaires ou chambres 16, 17, 18, 19 et 21 formées dans l'alésage 13 du corps, pour établir ou interrompre la communication entre les passages P, T, A et B conformément au fonctionnement décrit plus haut. Les chambres 16 et 21 communiquent entre elles en permanence par un passage axial 22 et par deux passages transversaux 23 et 24 formés dans le tiroir 1. Dans la figure 3, le tiroir est représenté dans une position telle que le distributeur est dans l'état o : le passage P est fermé par le tiroir 1; les passages B et T sont en communication par la chambre 16, la gorge 14 et la chambre 17; et les passages A et T sont en communication par la chambre 21, les passages 23, 22 et 24 et la chambre 16.

Afin de faciliter l'usinage des gorges ou chambres dans l'alésage 13 du corps 12, celui-ci peut être subdivisé en plusieurs blocs 12a, 12b et 12c, qui sont disposés bout à bout et assemblés les uns aux autres par des vis 25.

Selon une caractéristique de la présente invention, chacune des deux cames 4 et 5 passe et est guidée, sans jeu transversal, dans un passage respectif 26 ou 27 qui est formé dans le corps 12, respectivement dans les blocs 12a et 12c de celui-ci, aux extrémités de l'alésage 13 et qui s'étend perpendiculairement à l'axe longitudinal dudit alésage. Chacune des extrémités du tiroir 1 a la forme d'une fourche entre les deux branches de laquelle un galet 28 est monté à rotation sur un axe 29 qui est supporté par les deux branches de la fourche. Les deux extrémités de l'axe 29 font saillie à l'extérieur des branches de la fourche et s'engagent respectivement dans des mortaises 31 formées dans le bloc 12a ou 12c, afin d'empêcher le tiroir 1 de tourner sur lui-même autour de son axe longitudinal, tout en lui permettant d'être déplacé longitudinalement sous l'action de la came 4 ou 5.

Comme montré dans les figures 3 et 4, les passages 26 et 27 des blocs 12c et 12a peuvent avoir une section circulaire et chacune des deux cames 4 et 5 peut être formée à partir d'une tige cylindrique ayant un diamètre extérieur correspondant au diamètre intérieur du passage cylindrique 26 ou 27. La tige cylindrique formant chaque came 4 ou 5 peut être usinée de manière à présenter une nervure longitudinale 32 sur la tranche 32b de laquelle peut rouler le galet 28. Comme cela est plus particulièrement visible dans la figure 3, la hauteur de la nervure 32, mesurée entre la base 32a de la nervure et sa tranche 32b, varie le long de l'axe longitudinal de la tige formant la came 4 ou 5, afin de définir le profil de came en escalier à trois niveaux décrit plus haut en référence à la figure 2, pour commander la translation du tiroir 1 dans l'alésage 13 en relation avec un mouvement relatif entre la came 4 ou 5 et le corps 12 du distributeur dans l'une ou l'autre des deux directions indiquées par les flèches $F_1$ et $F_2$ dans les figures 2 et 3 (comme cela a déjà été indiqué, dans la pratique, les cames 4 et 5 pourront être mobiles et le corps 12 stationnaire ou, inversement, les cames 4 et 5 pourront être fixes et le corps 12 mobile suivant les flèches $F_1$ et $F_2$).

On notera que si l'amplitude maximale de mouvement du tiroir 1, donc la hauteur maximale de la nervure 32, doit être plus grande que la moitié du diamètre de la tige formant la came 4 ou 5, il en résulte que la came 4 ou 5 a au moins sur une partie de sa longueur une section transversale dont le contour a une partie circulaire qui s'étend angulairement sur moins de 180°. Dans ces conditions, pour assurer un guidage de la came 4 ou 5 sans jeu transversal dans le passage 26 ou 27, on peut alors prévoir au moins une plaque 33 (figures 3 et 4) qui est fixée au bloc 12a ou 12c à une extrémité de chacun des passages 26 et 27 et qui présente une ouverture 34 dont le contour correspond à celui de la section transversale de la came 4 ou 5, c'est-à-dire un contour en gros en forme de champignon comme cela est plus particulièrement visible dans la figure 4. Dans ce cas, tout mouvement transversal de la came 4 ou 5 est empêché, d'une part, par les deux parties droites 34a et 34b du contour de l'ouverture 34 de la plaque 33 et, d'autre part, par la partie de la paroi cylindrique du passage 26 ou 27 qui est en contact avec la partie circulaire 35 du contour de la section transversale de la came 4 ou 5. Une deuxième plaque 33 peut être également prévue à l'autre extrémité de chacun des passages 26 et 27, comme cela est montré en traits mixtes dans la figure 3.

Au lieu de tailler les tiges cylindriques formant les cames 4 et 5, de manière à former une nervure 32, on peut aussi tailler les tiges cylindriques, de manière à y former une rainure 36 de profondeur variable, sur le fond 36a de laquelle le tiroir 1 s'appuie par l'intermédiaire d'une bille 37, comme cela est montré dans la figure 5. Dans ce cas, la tige cylindrique formant la came 4 ou 5 peut avoir, sur toute sa longueur, une section transversale dont le contour a une partie circulaire qui s'étend sur plus de 180°, assurant ainsi un guidage sans jeu transversal de la came 4 ou 5 dans le passage 26 ou 27 sans qu'il soit nécessaire de prévoir une plaque comme les plaques 33 des figures 3 et 4.

La figure 6 montre une autre variante de réalisation dans laquelle chacune des cames 4 et 5 est réalisée à partir d'une barre ayant une section transversale en forme de T. Dans ce cas, chacun des blocs 12a et 12c des figures 3 et 4 est remplacé par deux blocs comme les blocs 12d et 12e maintenus assemblés par les vis 25. Le passage 26 ou 27 pour la came 4 ou 5 peut être par exemple formé par la conjonction de deux rainures formées dans les faces d'extrémité des blocs 12d et 12e qui sont mutuellement en contact. La rainure formée dans le bloc 12d reçoit la branche 38 de la barre à section en T formant la came 4 ou 5, tandis que la rainure formée dans le bloc 12e, qui a une largeur plus grande que celle formée dans le bloc 12d, reçoit la branche 39 de ladite barre à section en T. La profondeur de la rainure formée dans le bloc 12e correspond exactement à l'épaisseur de la branche 39, de telle façon que cette branche soit maintenue sans jeu entre le fond de ladite rainure et la face d'extrémité opposée du bloc 12d. Dans ces conditions, la came 4 ou 5 à section tranversale en T peut glisser longitudinalement dans le passage formé par les deux rainures, sans jeu transversal, c'est-à-dire sans jeu suivant l'axe longitudinal du tiroir 1. Le galet 28 peut rouler sur l'extrémité de la branche 38 de la came 4 ou 5. Cette branche 38 a une longueur qui varie le long de la came 4 ou 5 conformément au pofil en forme d'escalier à trois niveaux décrit plus haut. Bien entendu, la rainure formée dans la face d'extrémité du bloc 12d et recevant la branche 38 doit avoir une profondeur au moins égale à la longueur maximale de la branche 38.

La figure 7 montre une autre forme d'exécution des moyens libérables de retenue 11 prévus entre le tiroir 1 et le corps 12 du distributeur pour maintenir le tiroir dans l'une quelconque des trois positions a, o et b décrites plus haut. Comme montré dans la figure 7, les moyens libérables de retenue 11 peuvent comprendre au moins un anneau élastique fendu 41, qui est logé dans une gorge circulaire 42 prévue dans la surface cylindrique du tiroir 1 et qui peut s'expanser radialement pour s'engager dans l'une quelconque parmi trois gorges circulaires 43, 44 et 45 à section en V, qui sont prévues dans l'alésage 13 du corps 12 et qui définissent les trois positions susmentionnées.

Les deux cames 4 et 5 peuvent être communes à plusieurs distributeurs, par exemple deux distributeurs 10 et 20 comme montré dans la figure 8. Chacun des deux distributeurs 10 et 20 peut avoir une structure semblable à celle du distributeur des figures 3 et 4. Cependant, dans le cas où il est prévu deux distributeurs 10 et 20, chacune des deux cames 4 et 5 peut avoir, au lieu d'une seule nervure 32 (figures 3 et 4), deux nervures 46 et 47 (figures 9 et 10), qui sont disposées côte à côte le long de la tige formant la came 4 ou 5, la nervure 46 se trouvant d'un côté du plan médian longitudinal 48 du distributeur 10 ou 20, tandis que la nervure 47 se trouve de l'autre côté dudit plan médian longitudinal 48. Les deux nervures 46 et 47 peuvent avoir des profils différents. Par profils différents, on entend des profils qui ont des formes différentes ou qui ont la même forme mais sont décalés longitudinalement l'un par rapport à l'autre. Dans ces conditions, l'encoche de la fourche qui est formée à chacune des extrémités du tiroir 1 de chacun des deux distributeurs 10 et 20 est décalée latéralement par rapport au plan médian longitudinal 48, de telle sorte que le galet 28 du tiroir 1 du distributeur 10 coopère avec la nervure 46 comme montré dans la figure 9, tandis que le galet 28 du tiroir 1 du distributeur 20 coopère avec la nervure 47 comme montré dans la figure 10. Avec le mode de réalisation des figures 8 à 10, il est possible de commander séquentiellement par exemple quatre vérins hydrauliques ou pneumatiques.

Il va de soi que les formes d'exécution de l'invention qui ont été décrites ci-dessus ont été données à titre d'exemple purement indicatif et nullement limitatif, et que de nombreuses modifications peuvent être facilement apportées par l'homme de l'art sans pour autant sortir du cadre de l'invention. C'est ainsi notamment que la communication entre les chambres 16 et 21, au lieu d'avoir lieu à travers des passages 22-24 formés dans le tiroir 1 (figure 3), peut avoir lieu par un passage de dérivation formé dans le corps 12.

## Revendications

1.- Distributeur de fluide à commande par came, comprenant un corps (12) ayant des premier et second passages (P et T) qui, en service, sont raccordés respectivement à une pompe (2) et à un réservoir de fluide (3), des troisième et quatrième passages (A et B) qui, en service, sont raccordés à un circuit d'utilisation, et un alésage (13) intersectant les quatre passages, un tiroir (1) qui est monté coulissant dans ledit alésage du corps et qui, dans une première position (a), établit des communications entre les premier et troisième passages (P et A) et entre les second et quatrième passages (T et B) et, dans une seconde position (b) espacée axialement de la première position, établit des communications entre les premier et quatrième passages (P et B) et entre les second et troisième passages (T et A), une première came (4) qui, en service, peut agir sur une des extrémités du tiroir (1) pour le déplacer axialement de sa première position à sa seconde position, et une seconde came (5) qui, en service, peut agir sur l'autre extrémité du tiroir pour le déplacer de sa seconde position à sa première position, les première et seconde cames étant liées mécaniquement l'une à l'autre, caractérisé en ce que, pour permettre l'actionnement séquentiel de deux vérins (6 et 7), qui, en service, sont respectivement raccordés aux troisième et quatrième passages (A et B) du corps (12), l'alésage (13) et le tiroir (1) sont conformés de telle façon que dans une troisième position (o) du tiroir, entre ses première et seconde positions (a et b), une communication est établie entre les second, troisième et quatrième passages (T, A et B), tandis que le premier passage (P) est fermé, que dans des positions intermédiaires ($a_i$) du tiroir, entre les première et troisième positions (a et o), une communication est établie seulement entre les second et quatrième passages (T et B), les premier et troisième passages (P et A) étant obturés par le tiroir (1), et que dans d'autres positions intermédiaires ($b_i$) du tiroir, entre les seconde et troisième positions (b et o), une communication est établie seulement entre les second et troisième passages (T et A), les premier et quatrième passages (P et B) étant obturés par le tiroir, et en ce que les première et seconde cames (4 et 5) ont chacune un profil en escalier à trois niveaux (a, o, b) définissant respectivement, dans l'ordre, la première, la troisième et la seconde position (a, o, b) du tiroir, la transition entre deux niveaux successifs quelconques parmi les trois niveaux étant constituée par une rampe ($a_i$, $b_i$) qui définit lesdites positions intermédiaires $a_i$, $b_i$) du tiroir.

2.- Distributeur selon la revendication 1, caractérisé en ce que les profils en escalier des première et seconde cames (4 et 5) sont décalés l'un par rapport à l'autre transversalement à l'axe longitudinal du tiroir (1), de sorte que, au moins pour certaines positions des deux cames, la distance entre celles-ci, mesurée suivant l'axe longitudinal du tiroir, est plus grande que la longueur totale dudit tiroir, et en ce qu'au moins un dispositif de retenue (11) à enclenchement élastique est prévu entre le tiroir (1) et le corps (12) pour maintenir le tiroir dans l'une quelconque de ses première, seconde et troisième positions (a,b,o) tant qu'il n'est pas amené dans une autre de ses trois positions par l'une des deux cames (4 et 5).

3.- Distributeur selon la revendication 2, caractérisé en ce que le dispositif de retenue (11) comprend au moins un anneau élastique fendu (41), qui est logé dans une gorge circulaire (42) prévue dans la surface cylindrique du tiroir (1) et qui peut s'expanser radialement pour s'engager dans l'une quelconque parmi trois gorges circulaires (43,44, et 45), à section en V, qui sont espacées axialement dans l'alésage (13) du corps (12) et qui correspondent aux première, troisième et seconde positions (a,o,b) du tiroir (1).

4.- Distributeur selon l'une quelconque des revendications 1 à 3, caractérisé en ce que chacune des première et seconde cames (4 et 5) est constituée par une tige, qui est montée coulissante dans un passage (26 ou 27) du corps (12) qui s'étend perpendiculairement audit alésage (13) et qui intersecte celui-ci à une de ses extrémités.

5.- Ensemble de distributeurs, caractérisé en ce qu'il comprend au moins deux distributeurs (10,20) selon la revendication 4, les première et seconde cames (4,5) étant communes aux deux distributeurs.

6.- Ensemble de distributeurs selon la revendication 5, caractérisé en ce que chacune des deux cames (4 et 5) a deux profils de came (46,47) disposés côte à côte le long de la tige formant la came, l'un (46) des deux profils coopérant avec le tiroir (1) de l'un (10) des deux distributeurs, l'autre profil (47) coopérant avec le tiroir (1) de l'autre distributeur (20).

FIG.1

FIG.2

FIG. 3

FIG.4

FIG.6

FIG.5

FIG.7

FIG.8

FIG.9

FIG.10

EP 0 465 301 A1

Office européen des brevets

**RAPPORT DE RECHERCHE EUROPEENNE**

Numéro de la demande

EP    91 40 1719

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,A | DE-A-2414632 (HERION)<br>* le document en entier *<br>--- | 1, 5. | F16K31/524 |
| A | US-A-3072149 (HASBANY)<br>* figures 1-4 *<br>--- | 2, 3. | |
| A | US-A-3602245 (MEISEL)<br>--- | | |
| A | DE-A-2423656 (ATOS)<br>----- | | |

DOMAINES TECHNIQUES RECHERCHES (Int. Cl.5)

F16K
F15B

Le présent rapport a été établi pour toutes les revendications

| Lieu de la recherche | Date d'achèvement de la recherche | Examinateur |
|---|---|---|
| LA HAYE | 14 AOUT 1991 | KNOPS J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

12